# EUROPEAN PATENT SPECIFICATION

(11) **EP 2 375 256 B1**
(45) Date of publication and mention of the grant of the patent: **11.09.2013**
(21) Application number: 11173036.2
(22) Date of filing: 23.07.2008
(51) Int. Cl.: G01N 35/00, C12M 1/02, C12M 1/10, C12M 1/42, B01L 3/00, G01N 33/483, G01N 33/53, G01N 33/543, G01N 27/447, F16K 99/00, B01F 15/02, B01F 13/00, B01F 11/00

(54) **Use of a Centrifugal Force-Based Microfluidic Device for Nucleic Acid Detection**
Verwendung von einer Mikrofluidischen Vorrichtung auf Zentrifugalkraftbasis zur Nukleinsäuredetektion
Utilisation d'un dispositif microfluidique à base de force centrifuge pour la détection d'acides nucléiques

(30) Priority: 31.07.2007 KR 20070077174
(43) Date of publication of application: 12.10.2011
(62) Divisional of application: 08160986.9
(73) Proprietor: Samsung Electronics Co., Ltd., Suwon-si, Gyeonggi-do, 443-742 (KR)
(72) Inventor: Lee, Jungnam, Gyeonggi-do (KR); Lee, Jeonggun, Gyeonggi-do (KR); Park, Jongmyeon, Gyeonggi-do (KR); Cho, Yoonkyoung, Gyeonggi-do (KR)
(74) Representative: Grünecker, Kinkeldey, Stockmair & Schwanhäusser

(56) References cited:
- WO-A-2006/032044
- WO-A-2007/073107
- US-A1- 2001 055 812
- US-B1- 6 706 519

## Description

### BACKGROUND OF THE INVENTION

### 1. Field of the Invention

The present invention relates to a use of a centrifugal force-based microfluidic device, and more particularly, to a use of a centrifugal force-based microfluidic device in which a target cell gene is extracted from a biological sample and the presence of the target cell gene is detected by polymerase chain reaction (PCR) in microfluidic structures (including chambers, channels, and valves) arranged in a rotary platform, through a series of manipulations using the rotation of the platform,. The present invention also provides a microfluidic system including the microfluidic device.

### 2. Description of the Related Art

Generally, microfluidic structures constituting a microfluidic device include a chamber for containing a trace amount of a fluid, a channel through which the fluid flows, a valve for controlling the flow of the fluid, various functional units receiving the fluid and performing predetermined functions, etc. A microchip in which microfluidic structures are arranged on a chip-like substrate to perform an assay including a biochemical reaction is called a "biochip". In particular, a device designed for performing various steps of treatments and manipulations on a single chip is called "lab-on-a-chip".

In order to move a fluid in microfluidic structures, a driving pressure is required. The driving pressure may be a capillary pressure or a pressure exerted by a separate pump. Recently, centrifugal force-based microfluidic devices in which microfluidic structures are arranged in a disk type platform have been proposed. These microfluidic devices are also called "lab-on-a disks" or "Lab CDs".

A device in which polymerase chain reaction (PCR) is performed in a disk type platform has been proposed in U.S. Patent Nos. 6,706,519, 6,990,290, and 6,884,395, and U.S. Patent Application Publication No. 2004-0259237. However, a device in which, in a disk type platform, target cells are isolated from a biological sample, purified, and concentrated, and nucleic acids are extracted from the concentrated target cells and are subjected to PCR has been demanded.

Document WO 2007/073107 A discloses a bio memory disc and an assay method using the bio memory disc where a lab-on-a-chip process system includes an assay diagnosis unit, a nucleic acid hybridization assay unit, or an immuno-assay unit. A bio memory disc drive apparatus includes a controller for controlling and driving an optical disc including a CD or a DVD and the bio memory disc. The bio memory disc may be rotated at a high speed, so that the DNA or the RNA is separated from the sample by using centrifugal separation. Further, the bio memory disc may comprise at least one preparation chamber for preparing a DNA sample, and at least one DNA amplification chamber for amplifying the prepared DNA sample, or for performing polymer chain reaction (PCR) amplification thereof. Further, the chamber is integrated with a heating means or a laser generating unit for heating the chamber so as to adjust on-off of DNA sample amplification or enzyme mechanism in the chamber.

### SUMMARY OF THE INVENTION

The present invention provides a use of a centrifugal force-based microfluidic device according to claim 1. Preferred embodiments are defined in the dependent claims.

Throughout the specification, the term "cells" is meant to represent all organisms including nucleic acids as replicable genes, as well as biological cells. Thus, the "cells" as used herein include animal cells and bacteria, and further, viruses. Pathogens that can infect animals including human bodies can be mainly used as target cells. They include, but are not limited to, viruses, rickettsiae, bacteria, fungi, spirochaetes, and worms. The "biological sample" or "sample" refers to a fluid material derived from human body or non-human animal, e.g., blood, urine, or saliva.

Throughout the specification, the term "microfluidic structure(s)" refers to structure(s) including a chamber, a channel, and a valve, in which a fluid can stay or flow. The term "flow path(s)" refer to microfluidic structure(s) in which a fluid can flow. Thus, the "flow path(s)" as used herein is not limited to specially shaped structure(s), and may be in a shape of a channel or in a shape of a small hole between chambers.

### BRIEF DESCRIPTION OF THE DRAWINGS

The above and other features and advantages of the present invention will become more apparent by describing in detail exemplary embodiments thereof with reference to the attached drawings in which:

FIG. 1 is a plan view illustrating a microfluidic device for use according to an embodiment of the present invention;

FIG. 2 is a sectional view illustrating an example of a normally closed valve included in the microfluidic device of FIG. 1;

FIG. 3 is a sectional view illustrating an example of a normally open valve included in the microfluidic device of FIG. 1;

FIG. 4 is a plan view illustrating a microfluidic device for use according to another embodiment of the present invention;

FIGS. 5A through 5D illustrate extraction of nucleic acids from magnetic beads which have captured target cells and amplification of the nucleic acids in the microfluidic device of FIG. 4;

FIG. 6 is a graph illustrating the results of pressure resistance tests for the normally open valve of FIG. 3;

FIG. 7 is a detailed sectional view illustrating a polymerase chain reaction (PCR) chip unit included in the microfluidic device of FIG. 1 or 4;

FIG. 8 is a sectional view illustrating a modified example of the PCR chip unit of FIG. 7;

FIG. 9 is a sectional view illustrating an example of a magnetic bead position control unit included in the microfluidic device of FIG. 4;

FIG. 10 is a planar free body diagram illustrating a magnetic bead position control unit;

FIG. 11 is a sectional free body diagram illustrating the operational principle of a magnetic bead position control unit;

FIG. 12 is a graph illustrating a magnetic force with respect to a vertical distance and a horizontal distance between two magnets in the free body diagram of FIG. 11; and

FIG. 13 is a perspective view illustrating a microfluidic system for use according to an embodiment of the present invention.

### DETAILED DESCRIPTION OF THE INVENTION

The present invention will now be described more fully with reference to the accompanying drawings, in which exemplary embodiments of the invention are shown.

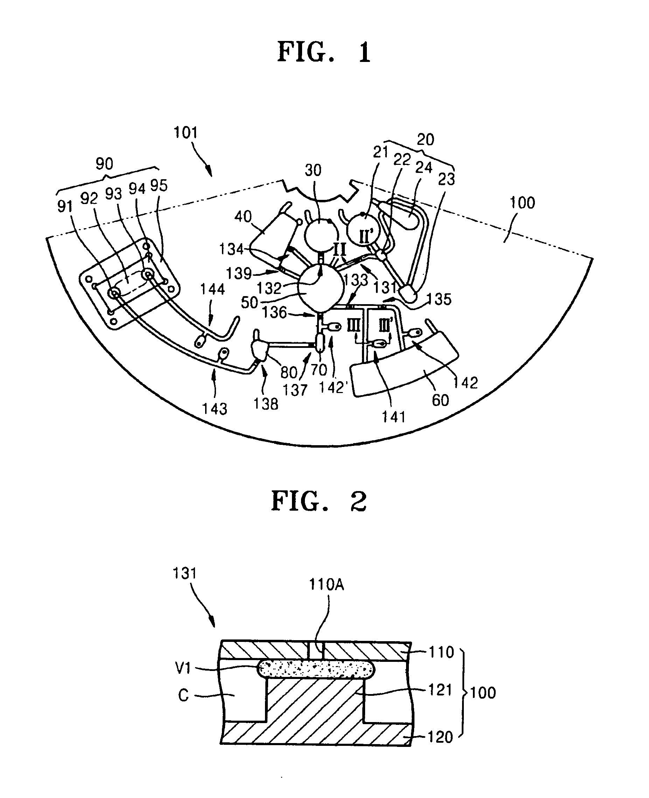

FIG. 1 is a plan view illustrating a microfluidic device for use according to an embodiment of the present invention. Referring to FIG. 1, a centrifugal force-based microfluidic device 101 has a rotary disk type platform 100. While Fig. 1 depicts a disk type platform as an exemplary embodiment, the shape of the platform 100 is not limited to a disk type, as long as the platform may rotate. One or more microfluidic structures may be arranged in the platform 100. For example, the platform 100 may be divided into several fan-shaped sections, and each section may have microfluidic structures that are independently operated from those in other sections.

The microfluidic structures arranged in the platform 100 include a plurality of chambers, a plurality of channels connecting the chambers, and a plurality of valves controlling the flow of a fluid in the channels. These microfluidic structures can be provided by forming three-dimensional patterns on one or two of facing surfaces of two overlapped disks forming the disk type platform 100. An upper disk of the two disks may be formed of a transparent material so that the movement of a fluid or a reaction can be optically observed. A method of manufacturing such microfluidic structures is well known in the art.

In the microfluidic device 101 of the present embodiment, the microfluidic structures can be divided into two units according to their function. One unit is a so-called "target cell nucleic acid extraction unit" in which target cells are isolated from an loaded biological sample, purified, and concentrated, and the concentrated target cells are lysated to extract nucleic acids. The other unit is a polymerase chain reaction (PCR) unit in which a fluid containing the extracted nucleic acids is mixed with a PCR reagent and the reaction mixture is subjected to PCR. The two units are structurally connected to each other via channels, and are functionally systemically combined to each other so that a series of operations, including separating target cells (particularly, pathogens) from a biological fluid sample and determining the genetic characteristics of the separated target cells, can be automatically and sequentially performed.

The biological fluid sample or biological sample fluid which can be used to separate target cells according to the present invention include, but is not limited to, blood, serum, plasma, urine, sweat, tear fluid, semen, saliva, cerebral spinal fluid, or a purified or modified derivative thereof. The sample may also be obtained from a plant, animal tissue, cellular lysate, cell culture, microbial sample, or soil sample, for example. The sample may be purified or pre-treated if necessary before testing, to remove substances that might otherwise interfere with the separation of the target cells and the subsequent nucleic acid amplification. The genetic material which will be subject to the amplification may be nucleic acid such as DNA or RNA.

First, the microfluidic structures of the target cell nucleic acid extraction unit will now be described. The microfluidic structures of the target cell nucleic acid extraction unit include a sample chamber 21 receiving a fluid sample and a buffer chamber 40 receiving a buffer solution. The sample chamber 21 and the buffer chamber 40 each include an inlet (or injection) hole (not shown). A user can load a sample and an appropriate buffer solution into the sample chamber 21 and the buffer chamber 40, respectively, via the inlet holes when the device is ready to use. The buffer solution may also be loaded when the device is fabricated.

A mixing chamber 50 is disposed radially outward of the two chambers 21 and 40. The mixing chamber 50 is connected to the sample chamber 21 and the buffer chamber 40 via channels which form fluid paths. The flow of the sample or target cell solution is controlled using valves which are usually located in the channels between chambers. For example, a normally closed valve 131 is disposed at the sample chamber 21, and normally closed valves 134 and 139 are disposed at the buffer chamber 40. A centrifugation unit 20 centrifuges a sample and releases a portion of the sample, which may be a supernatant or precipitate, into the mixing chamber 50. In this case, the normally closed valve 131 may not be directly connected to the sample chamber 21 but may be disposed at an outlet of the centrifugation unit 20 as shown in FIG. 1. The centrifugation unit 20 includes a supernatant channel 22 which extends radially outward of an outlet of the sample chamber 21 and a precipitate collector 23 which is disposed at an end of the supernatant channel 22 and which has an enlarged sectional area. A portion of the supernatant channel 22 may be connected to the mixing chamber 50 via the normally closed valve 131. The precipitate collector 23 and the sample chamber 21 or the supernatant channel 22 may be connected to each other via an additional bypass channel(s). There may be a surplus sample collection chamber 24 positioned between and connected to the sample chamber 21 or the supernatant channel 22 and the precipitate collector 23.

The functions of the centrifugation unit 20 are as follows. For example, when a whole blood is loaded into the sample chamber 21 and the platform 100 is rotated, heavy blood corpuscles are collected in the precipitate collector 23, and the supernatant channel 22 is mostly filled with blood plasma. At this time, when the normally closed valve 131 connected to the mixing chamber 50 is opened, blood plasma filled in a portion of the supernatant channel 22 which is located radially inward of the normally closed valve 131 is transferred into the mixing chamber 50. The centrifugation unit 20 can reduce the possibility of inclusion of an element capable of inhibiting PCR into a nucleic acid extraction solution prior to PCR being performed. When a centrifugation of a sample is not required, the normally closed valve 131 may be disposed at the outlet of the sample chamber 21.

An outlet of the mixing chamber 50 is disposed radially outward of the outlets of the sample chamber 21, the centrifugation unit 20, and the buffer chamber 40. A normally closed valve 136 is disposed at the outlet of the mixing chamber 50. The outlet of the mixing chamber 50 may have a gradually decreasing sectional area as it is closer to the normally closed valve 136. For this, the inside of the normally closed valve 136 may partially have a channel shape. The mixing chamber 50 can receive an agent (not shown) which can selectively bind to target cells. Such agent may be microparticles carrying probes which capture target cells. Such probes are attached or coupled to surface of the microparticles. In the mixing chamber 50, target cells of the sample are selectively bound to surfaces (e.g., probes) of the microparticles. The selective binding may be specific or non-specific. The mixing chamber 50 also receives the buffer solution from the buffer chamber 40.

The microfluidic device may further include a microparticle chamber 30 receiving the microparticles, and the microparticle chamber 30 is disposed radially inward of the mixing chamber 50. In this case, a normally closed valve 132 may be disposed at a flow path connecting the microparticle chamber 30 and the mixing chamber 50. The microparticles may be loaded into the microparticle chamber 30, in the form of a dispersion and may flow into the mixing chamber 50 via the normally closed valve 132.

In order to capture target cells (mainly, pathogens) from a biological sample such as blood (blood plasma, serum), saliva, or urine, the surface of the microparticles may be treated to have affinity to the target cells. Such surface treatment may include, but be not limited to, a coating with a probe such as an antibody or metal oxide having affinity to the target cells. The affinity pf the probe to the target cells may be specific or non-specific.

The antibody is useful for detecting a very low concentration of pathogen since it can selectively capture only a desired specific pathogen. Microparticles on which an antibody capable of specifically binding with a specific pathogen is bound are commercially available from various sources such as Invitrogen, Qiagen, etc. Examples of commercially available microparticles include Dynabeads^{™} Genomic DNA Blood (Invitrogen), Dynabeads^{™} anti-E.coli O157 (Invitrogen), CELLection^{™} Biotin Binder Kit (Invitrogen), MagAttract^{™} Virus Min M48 Kit (Qiagen), etc. By using these microparticles, *Diphtheria* toxin, *Enterococcus faecium*, *Helicobacter pylori*, HBV, HCV, HIV, *Influenza A*, *Influenza B, Listeria*, *Mycoplasma pneumoniae*, *Pseudomonas sp.*, *Rubella virus*, *Rotavirus*, etc. can be isolated.

The metal oxide may be Al₂O₃, TiO₂, Ta₂O₃, Fe₂O₃, Fe₃O₄, or HfO₂, but is not limited thereto. In one embodiment, the metal oxide is Al₂O₃ or TiO₂. The metal oxide may be deposited on surfaces of the microparticles by PVD (physical vapor deposition), ALD (atomic layer deposition), a sol-gel method, or the like. The deposition of metal oxide on the surfaces of microparticles is known in the art and may be generally performed by PVD, ALD, a sol-gel method, or the like.

The microparticles may have a size of 50 nm - 1,000 µm, more preferably 1 ~ 50 µm. The microparticles may be a mixture of particles having two or more different sizes. That is, the microparticles may have the same size or different sizes. For example, the microparticles may be magnetic beads. The magnetic beads are not limited, as long as they have a magnetic property. In particular, the magnetic beads may include at least one strongly magnetic material selected from the group consisting of metals such as Fe, Ni, and Cr, and oxides thereof.

A waste chamber 60 is disposed radially outward of the mixing chamber 50. The waste chamber 60 may be connected to a portion (i.e., a portion having a smaller sectional area as described above) of the mixing chamber 50 adjacent to the outlet of the mixing chamber 50 via a plurality of channels. In an embodiment, a space may be guaranteed between the portion of the mixing chamber 50 connected to the waste chamber 60 and the normally closed valve 136 disposed at the outlet of the mixing chamber 50, so that the microparticles received in the mixing chamber 50 can be collected by a centrifugal force. The channels connected to the waste chamber 60 are provided with normally closed valves 133 and 135 as well as normally open valves 141 and 142. The normally closed valves 133 and 135, at their original state, block the channel, and open the channel when a fluid flow from the mixing chamber 50 is needed. The normally open valves 141 and 142, at their original state, do not close the channel, and block the channel when a fluid flow from the mixing chamber 50 needs to be stopped or controlled.

A cell lysis chamber 70 is disposed farther from the center of the platform 100 than the outlet of the mixing chamber 50. An inlet of the cell lysis chamber 70 is connected to the normally closed valve 136 disposed at the outlet of the mixing chamber 50 via a channel. An outlet of the cell lysis chamber 70 may be disposed such that after the microparticles-containing fluid is subjected to cell lysis, the microparticles are left and the fluid is discharged. For example, a space for trapping the microparticles may be present in the cell lysis chamber 70 and may be positioned closer to an outer edge of the platform 100 than an outlet provided with a normally closed valve 137 so that the microparticles can be trapped in the cell lysis chamber 70 by a centrifugal force. As another example, when the microparticles are magnetic beads, a magnetic field-forming material may be additionally disposed adjacent to the cell lysis chamber 70 in order to collect the magnetic beads by a magnetic force. The magnetic field-forming material may be a permanent magnet. The microparticles are not necessarily required to be trapped in the cell lysis chamber 70. After cell lysis, a nucleic acid-containing solution, together with the microparticles, may also be discharged. It is possible to concentrate the target cells in the device, by collecting target call-captured microparticles.

A normally open valve 142' may further be disposed in the channel connecting the normally closed valve 136 disposed at the outlet of the mixing chamber 50 and the cell lysis chamber 70. In this case, the normally open valve 142' functions to seal the cell lysis chamber 70 when cell lysis is performed using electromagnetic radiation.

In one embodiment, the cell lysis chamber 70 traps the microparticles in which target cells or viruses have been captured on surfaces thereof and performs cell lysis by external electromagnetic radiation application, e.g., laser ablation. The cell lysis using the electromagnetic radiation and the microparticles can be rapidly performed by heating in a liquid medium and electromagnetic ablation. Electromagnetic energy is supplied to the microparticles by the electromagnetic radiation to provide heat to cells attached to the microparticles, and at the same time, a physical or mechanical impact is applied to the microparticles to thereby achieve cell lysis.

One of major advantages of the cell lysis using the microparticles and the electromagnetic radiation is that the number of nucleic acid isolation steps is reduced. Generally, cell lysis involves protein denaturation. Denatured proteins and cell debris may adversely affect nucleic acid amplification using PCR. In the microfluidic device 101 of the present embodiment, since the microparticles are used in cell lysis, denatured proteins and cell debris except nucleic acids are attached to surfaces of the microparticles. These microparticles can be isolated from a nucleic acid extraction solution by gravity, centrifugal force, or magnetic force, and thus, after cell lysis, the purification of a nucleic acid solution can be omitted. Therefore, the detection limit of a target material can be reduced, a nucleic acid extraction duration can be remarkably reduced, and a signal amplitude can be increased, thereby remarkably improving a PCR assay. The cell lysis using the electromagnetic radiation and the microparticles may be performed for about 30-40 seconds.

Ablation using electromagnetic radiation may be laser ablation. The term "laser ablation" means all phenomena occurring on a material exposed to laser beam. Laser ablation rapidly increases a surface temperature of a material (e.g., microparticles) from several hundreds to up to several thousands of degrees. When a surface temperature of a material is at a boiling point or more, a material at a liquid state is evaporated, and at the same time, a saturation vapor pressure on a surface of the material is also rapidly increased. A saturation vapor pressure is represented as a function of a temperature according to the Clausius-Clapeyron equation. In high power pulse lasing, a saturation vapor pressure is generally increased to several tens of atmospheric pressure or more. A pressure at which vapor acts on a surface of a material upon ejection of the vapor is called "recoil pressure". A recoil pressure is about 0.56Pₛₐₜ with the proviso that a vapor pressure is Pₛₐₜ.

A shock wave is mainly generated during lasing with a large instant intensity, e.g., pulse lasing. The pressure of a vapor generated from a surface of a material heated to its boiling point or higher during a short time of several nanoseconds or several tens nanoseconds is increased to several to several tens of atmospheric pressure, and the vapor expands into ambient air, thereby forming a shock wave. A vapor expanding by a very large pressure exerts a pressure of about 0.56Ps (in which Ps is a saturation vapor pressure on a surface of a material) to the material.

The laser may be a pulse laser or a continuous wave (CW) laser. An excessively low laser output cannot efficiently perform laser ablation. In an embodiment, in order to generate a continuous wave laser, the laser output of 10 mW or more is used. For the pulse laser, the laser output may be 1 mJ/pulse or more. Preferably, the output of the pulse laser is 3 mJ/pulse or more and the output of the continuous wave laser is 100 mW or more. If the output of the continuous wave laser is less than 10 mW and the output of the pulse laser is less than 1 mJ/pulse, energy insufficient for cell lysis may be applied.

When performing cell lysis using laser ablation, the laser is generated in a specific wavelength range which can be absorbed by the microparticles. The laser may be generated in a wavelength range of 400 nm or more, more preferably in a wavelength range of 750 to 1300 nm. If the laser is generated in a wavelength range of less than 400 nm, denaturation or damage of nucleic acids may be caused. On the other hand, if the laser is generated in a wavelength range of more than 1300 nm, a considerable amount of energy may be absorbed by water. The laser may be generated in at least one wavelength range. That is, the laser may be generated at a single wavelength or two or more different wavelengths within the above-described wavelength range.

The operational principle and method of the target cell nucleic acid extraction unit are specifically disclosed in One-step pathogen specific DNA extraction from whole blood on a centrifugal microfluidic device, Lab Chip, 2007, 7, 565-573*,* co-authored by the inventors of the present invention.

In order to assist the understanding of a microfluidic device for use according to the present invention, extraction of HBV DNA from a blood sample using the target cell nucleic acid extraction unit of the microfluidic device 101 of FIG. 1 will be described.
Prior to the experiment, microparticles are prepared.

### 1) Preparation of antibody for surface modification of microparticles

10 µℓ of a solution containing a secondary antibody (Virostat, 1817, host animal: rabbit) having specific affinity to biotin-labeled hepatitis B virus surface antigen is prepared.

### 2) Preparation of microparticles

100 µℓ of streptavidin-labeled Dynabeads (Dynabeads® Streptavidin C1, diameter of 1.0 µm), which are magnetic beads used as microparticles, are mixed to prepare a homogeneous solution. 100 µℓ of the homogeneous solution is loaded in a tube, placed on magnets, and incubated for two minutes. A supernatant is extracted and removed using a pipette. The tube is removed from the magnets. 100 µℓ of a buffer 1 (PBS containing 0.1% BSA, pH 7.4) is added to the tube and all the components are mixed. The tube is again placed on the magnets and the reaction mixture is incubated for two minutes. A supernatant is extracted and removed using a pipette. The tube is removed from the magnets. 100 µℓ of a buffer 1 (PBS containing 0.1% BSA, pH 7.4) is added to the tube and all the components are mixed.

### 3) Precoating of microparticles with antibody

8 µg of biotin-labeled HBV secondary antibody (Virostat, 1817) is added to 100 µℓ of the above-prepared magnetic bead solution, and all the components are mixed. The tube containing the reaction mixture is inverted several times and the reaction solution is incubated at room temperature for 30 minutes. The magnetic beads are collected using magnets for two minutes, and a supernatant is removed. 2 ml of a cleaning buffer (PBS containing 1% BSA, pH 7.4) is added and all the components are mixed by inverting the tube several times. The magnetic beads are collected using magnets for two minutes, and a supernatant is removed. 100 µℓ of a buffer 1 (PBS containing 0.1% BSA, pH 7.4) is added to resuspend the precoated magnetic beads.

Extraction of HBV DNA from a blood sample using the above-prepared magnetic beads and the target cell nucleic acid extraction unit of the microfludic device 101 of FIG. 1 is performed as follows.

First, 100 µℓ of a HBV spiked blood is loaded in the sample chamber 21, 100 µℓ of an antibody-attached magnetic bead (M1) solution is loaded in the microparticle chamber 30, and 100 µℓ of a PBS buffer is loaded in the buffer chamber 40. While rotating the platform 100, the blood sample is centrifuged by the centrifugation unit 20.

Next, the valve 131 between the centrifugation unit 20 and the mixing chamber 50 is opened to transfer 30 µℓ of the resultant blood plasma to the mixing chamber 50. At the same time, the normally closed valve 132 between the microparticle chamber 30 and the mixing chamber 50 is opened to transfer the magnetic bead solution to the mixing chamber 50.

While alternately rotating the platform 100 for five minutes, the magnetic beads are mixed with the blood plasma, and HBVs, which are target cells, are captured on surfaces of the magnetic beads. Then, the magnetic beads are collected at an output of the mixing chamber 50 by rotating the platform 100 in one direction.

The normally closed valve 133 between the mixing chamber 50 and the waste chamber 60 is opened to release a supernatant (blood plasma residue) into the waste chamber 60, and the normally open valve 141 disposed in a channel provided with the normally closed valve 133 is closed. Then, the normally closed valve 134 between the buffer chamber 40 and the mixing chamber 50 is opened to supply the buffer solution into the mixing chamber 50.

The platform 100 is alternately rotated for 20 seconds. At this time, the magnetic beads are rinsed by the buffer solution. Then, the magnetic beads are again collected, and another normally closed valve 135 disposed at a channel communicating with the waste chamber 60 is opened to release the buffer solution into the waste chamber 60. The normally closed valve 136 disposed at the outlet of the mixing chamber 50 is opened, and the magnetic beads of the mixing chamber 50 are transferred to the cell lysis chamber 70.

Next, the normally open valve 142 of the channel communicating with the cell lysis chamber 70 is closed, and laser beam is applied to the cell lysis chamber 70 to perform laser ablation. At this time, as described above, HBVs attached to surfaces of the magnetic beads are lysated. As a result, DNAs are released, and cell debris generated during the lysis of HBVs are attached to surfaces of the magnetic beads. Therefore, a DNA solution sufficient to perform PCR is obtained, immediately after opening the normally closed valve 137, which is disposed at the outlet of the cell lysis chamber 70.. Even though an extraction of DNA from a target cell has been described above, one skilled in the art should note that other types of genetic material, for example RNA may be extracted from a target cell. When RNA is extracted as a genetic material, the following gene amplification using PCR may be performed on RNA after reverse transcription of the RNA to cDNA. Such reverse transcription is well known in the art. In order to perform reverse transcription, after the RNA extraction, but prior to the PCR amplification, the microfluidic device may have additional unit for performing the reverse transcription between the genetic material extraction unit and the PCR unit.

Hereinafter, the microfluidic structures of the PCR unit will be described. A PCR reagent chamber 80 storing a PCR reagent is disposed radially outward of cell lysis chamber 70. The PCR reagent includes materials necessary for nucleic acid amplification. The PCR reagent chamber 80 receives a nucleic acid-containing fluid from the cell lysis chamber 70, mixes the fluid with the PCR reagent, and discharges the resultant mixture via a normally closed valve 138 disposed at an outlet of the PCR reagent chamber 80. The PCR reagent may be a reagent for real-time PCR.

The PCR reagent chamber 80 is connected to a PCR chamber 92 via a channel. An inlet 91 of the PCR chamber 92 is disposed farther from the center of the platform 100 than the outlet of the PCR reagent chamber 80. The PCR chamber 92 may be a space integrated into the platform 100, like the above-described other chambers, or alternatively, may be an internal space of a PCR chip 94 which is detachably joined to the platform 100. For the latter case, the PCR chip 94 has the inlet 91 and an outlet 93 connected to the PCR chamber 92. The inlet 91 and the outlet 93 may be connected to channels arranged in the platform 100. A channel connected to the outlet 93 may be connected to an outlet vent, and the outlet vent may be disposed radially inward of the PCR reagent chamber 80 in the platform 100, as shown in FIG. 1. The PCR chip 94 may be fixedly disposed in the platform 100 by various methods. For example, the PCR chip 94 may be fixedly disposed in the platform 100 by a rear cover 95 fastened to the platform 100. Hereinafter, the PCR chip 94 and the rear cover 95 will be commonly referred to as "PCR chip unit 90".

Normally open valves 143 and 144 may be respectively provided at the channels connected to the inlet 91 and the outlet 93 of the PCR chamber 92. The normally open valves 143 and 144 function to seal the PCR chamber 92 during PCR.

Examples of the PCR chip 94 are disclosed in Microchip-based on step DNA extraction and real-time PCR in one chamber for rapid pathogen identification, Lab Chip, 2006, 6, 886-895.

FIG. 2 is a sectional view illustrating an example of a normally closed valve included in the microfluidic device 101 of FIG. 1. A centrifugal force-based microfluidic device for use according to the present invention may include various types of normally closed valves. FIG. 2 illustrates an example of normally closed valves, i.e., a phase transition type normally closed valve which is disposed in a platform (see 100 of FIG. 1) and which is operated by electromagnetic radiation supplied from the outside of the platform.

Referring to FIGS. 1 and 2, the normally closed valve 131 is formed between an upper plate 110 and a lower plate 120 constituting the platform 100, and includes a valve plug V1 in which heating particles are dispersed in a phase transition material which is in a solid state at room temperature. The valve plug V1 in a solid state is disposed at an initial position of a channel C having a smaller sectional area, and a portion of the channel C adjacent to the initial position has a greater width or depth than the initial position to provide a leeway space. The valve plug V1 is loaded in a molten state into the channel C via an opening 110A of the upper plate 110 and filled at the initial position of the channel C having the smaller sectional area to thereby block the channel C. The valve plug V1 is molten at high temperature, moved to the leeway space adjacent to the initial position, and then solidified in a state wherein a fluid path is opened.

In order to apply heat to the valve plug V1, an external energy source (not shown) emitting electromagnetic radiation is disposed outside of the platform. The external energy source may apply electromagnetic radiation in an area including the initial position of the valve plug V1. Here, the external energy source may be a laser source emitting laser beam (L), a light emitting diode emitting visible light or infrared rays, or a xenon lamp. In particular, the laser source may include at least one laser diode. The external energy source can be selected based on the wavelength of electromagnetic radiation that can be absorbed by the heating particles included in the valve plug V1. For example, when using heating particles having similar electromagnetic radiation absorption characteristics to the above-described microparticles, the normally closed valve 131 can be operated using the same electromagnetic energy source as used in the above-described cell lysis.

The size of the heating particles dispersed in the valve plug V1 can be adjusted so that the heating particles can be freely moved in the channel C having a width of several thousands of micrometers (µm). When electromagnetic radiation (e.g., laser) is applied to the heating particles, the temperature of the heating particles is rapidly increased by the electromagnetic energy, thereby generating heat. Furthermore, the heating particles can be uniformly dispersed in wax. In this regard, the heating particles may be structured to include a core including a metal component and a hydrophobic shell. For example, the heating particles may be structured to include a core formed of Fe and a shell formed of a plurality of surfactants which are bound to Fe to surround Fe. The heating particles may be commercially available in a dispersed state in carrier oil. A valve material forming the valve plug V1 can be prepared by adding a dispersed solution of the heating particles in carrier oil to a phase transition material and mixing all the components. The type of the heating particles is not limited to the above-illustrated examples. The heating particles may also be polymer beads, quantum dots, or magnetic beads.

The phase transition material may be wax. When the electromagnetic energy absorbed by the heating particles is converted to heat energy and the heat energy is transmitted to the surroundings, the wax is molten, thus making the wax flowable. Thus, the valve plug V1 is morphologically destroyed to open a fluid path. The wax may have an appropriate melting point. If the melting point of the wax is too high, a time required to melt the wax after electromagnetic radiation application is started may be increased, and thus, it is difficult to precisely control an opening time. On the other hand, if the melting point of the wax is too low, the wax may be partially molten even in the absence of electromagnetic radiation application, thereby causing fluid leakage. For example, the wax may be paraffin wax, microcrystalline wax, synthetic wax, or natural wax. The phase transition material may also be a gel or a thermoplastic resin. The gel may be polyacrylamides, polyacrylates, polymethacrylates, or polyvinylamides. The thermoplastic resin may be cyclic olefin copolymer (COC), poly(methyl methacrylate) (PMMA), polycarbonate (PC), polystyrene (PS), polyoxymethylene (POM), perfluoroalkoxy (PFA), polyvinylchloride (PVC), polypropylene (PP), polyethylene terephthalate (PET), polyetheretherketone (PEEK), polyacrylate (PA), polysulfone (PSU) or polyvinyldiene fluoride (PVDF), or the like.

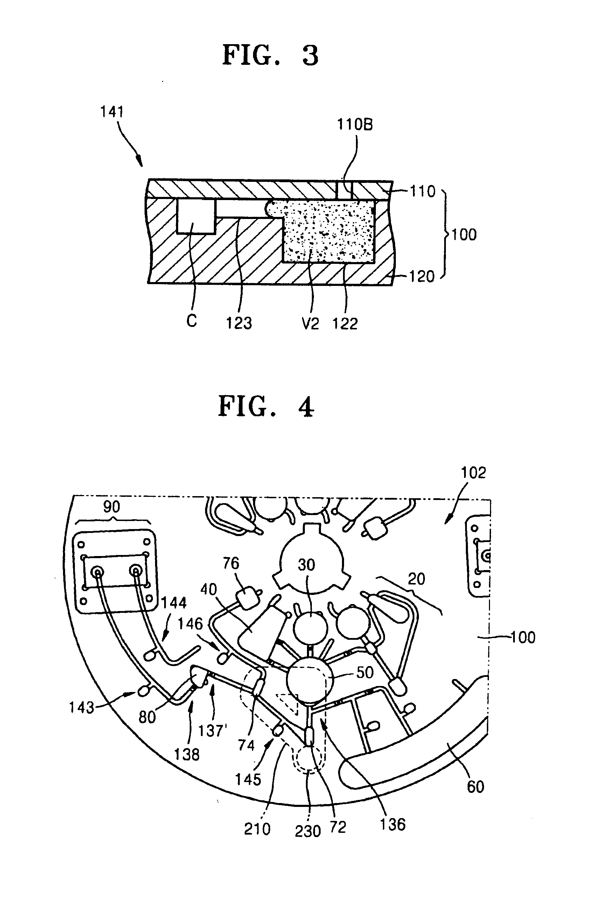

FIG. 3 is a sectional view illustrating an example of a normally open valve included in the microfluidic device 101 of FIG. 1. A centrifugal force-based microfluidic device for use according to the present invention may include various types of normally open valves. FIG. 3 illustrates an example of normally open valves, i.e., a phase transition type normally open valve which is disposed in a platform (see 100 of FIG. 1) and which is operated by electromagnetic radiation supplied from the outside of the platform.

Referring to FIGS. 1 and 3, the phase transition type normally open valve 141 includes a channel C, a valve chamber 122 connected to a portion of the channel C, and a valve material V2. At room temperature, the valve material V2 exists in a solid state and fills in the valve chamber 122. When heated, the valve material V2 is molten and expanded. The molten and expanded valve material enters into the channel C and is solidified to block the flow of a fluid in the channel C.

Like the above-described phase transition type normally closed valve 131, the phase transition type normally open valve 141 may be provided by a three dimensional pattern formed in an upper plate 110 or a lower plate 120 of the platform 100. An opening 110B may be formed in an upper portion of the valve chamber 122. The opening 110B is used as an inlet through which the valve material V1 in a molten state is loaded during fabrication of the microfluidic device 101.

A phase transition material and heating particles forming the valve material V2 are as described above with respect to the normally closed valve 131. An external energy source supplying electromagnetic radiation to the valve material V2 is also as described above. When electromagnetic radiation is applied to the valve material V2 including the phase transition material and the heating particles, the heating particles absorb an electromagnetic energy, thereby heating the phase transition material. As a result, the valve material V2 is molten and volumetrically expanded, and enters into the channel C via a path 123. The valve material V2 is solidified in the channel C to become a valve plug, thereby blocking the flow of a fluid in the channel C. The valve material V2 may have a composition as described in co-pending application No. 12/027,290 filed February 7, 2008.

FIG. 4 is a plan view illustrating a microfluidic device for use according to another embodiment of the present invention. Referring to FIG. 4, a microfluidic device 102 has a platform 100' including a first layer and a second layer. Microfluidic structures are arranged in the first layer, and a guide rail 210 is disposed in the second layer. A first magnet 230 is movably disposed in the guide rail 210. In this case, in the microfluidic structures, microparticles capturing target cells may be magnetic beads. A second magnet (not shown) having a magnetic force large enough to change the position of the first magnet 230 is disposed outside of the platform 100'.

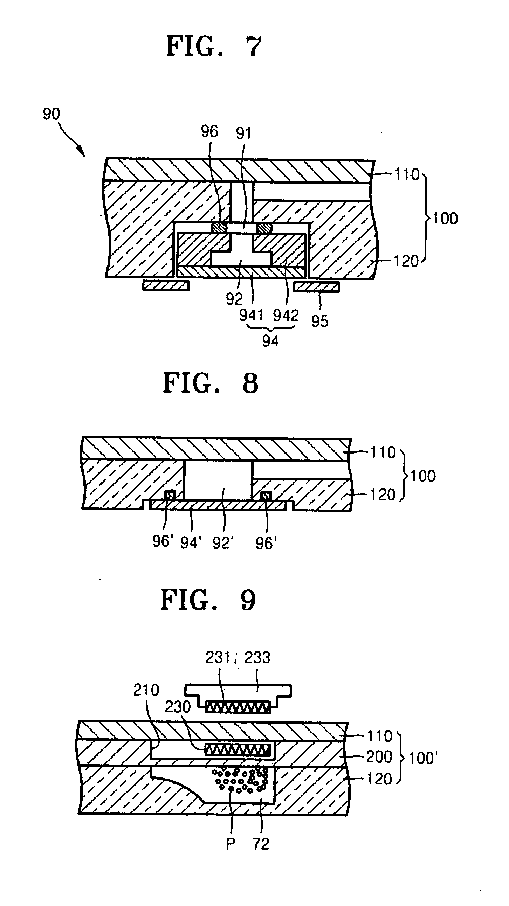

The second layer may be disposed above or below the first layer. The guide rail 210 is used as a path which connects several different positions from the center of the platform 100' in the second layer and which guides the movement of the first magnet 210. The guide rail 210 is provided along a movement path of the magnetic beads in the first layer. By using a magnetic force between the first magnet 230 and the second magnet and a centrifugal force acting on the first magnet 230 during rotation of the platform 100', it is possible to control the position of the first magnet 230 in the guide rail 210, thereby controlling the position of the magnetic beads in the microfluidic structures of the first layer. The principle will be described in more detail with reference to FIGS. 9 through 12

A centrifugation unit 20, a microparticle chamber 30, a buffer chamber 40, a mixing chamber 50, a waste chamber 60, channels connecting the chambers, and valves controlling the flow of a fluid in the chambers may be arranged in the microfluidic structures of the first layer in the same manner as in the above-described microfluidic device 101 of FIG. 1 except the position of a cell lysis chamber 74 and the construction of transferring magnetic beads which have captured target cells from the mixing chamber 50 to the cell lysis chamber 74. A magnetic bead collection chamber 72 is disposed closer to the outer edge of the platform 100' than a normally closed valve 136 disposed at an outlet of the mixing chamber 50. The cell lysis chamber 74 is disposed radially inward of the magnetic bead collection chamber 72 and is connected to the magnetic bead collection chamber 72 via a channel. A normally open valve 145 may be disposed in the channel connecting the two chambers 72 and 74. The guide rail 210 disposed in the second layer includes a path connecting two positions corresponding to the two chambers 72 and 74. When magnetic beads which have captured target cells are collected in the magnetic bead collection chamber 72, they can be transferred to the cell lysis chamber 74 in a direction against a centrifugal force by moving the first magnet 230 along the guide rail 210.

A PCR unit connected to the cell lysis chamber 74 is disposed in the second layer. The PCR unit may include a PCR reagent chamber 80 storing a PCR reagent and a PCR chip unit 90, like in the above-described microfluidic device 101 of FIG. 1. As described above, a normally closed valve 137' is provided between an outlet of the cell lysis chamber 74 and an inlet of the PCR reagent chamber 80. The normally closed valve 137' may be disposed closer to the PCR reagent chamber 80 than to the cell lysis chamber 74.

A lubricant chamber 76 may be further disposed closer than the cell lysis chamber 74 to the center of the platform 100'. The lubricant chamber 76 may be connected to a portion of the cell lysis chamber 74 via a channel, the portion being radially inward of the magnetic bead collection chamber 72 and the cell lysis chamber 74.. A normally open valve 146 may be further provided between the two chambers 76 and 74 in order to seal the cell lysis chamber 74 upon cell lysis.

According to the present embodiment, an area of the platform 100' can be efficiently utilized. That is, magnetic beads which have captured target cells can be moved in a direction against a centrifugal force, thereby allowing the radius of the platform 100' to be reduced.

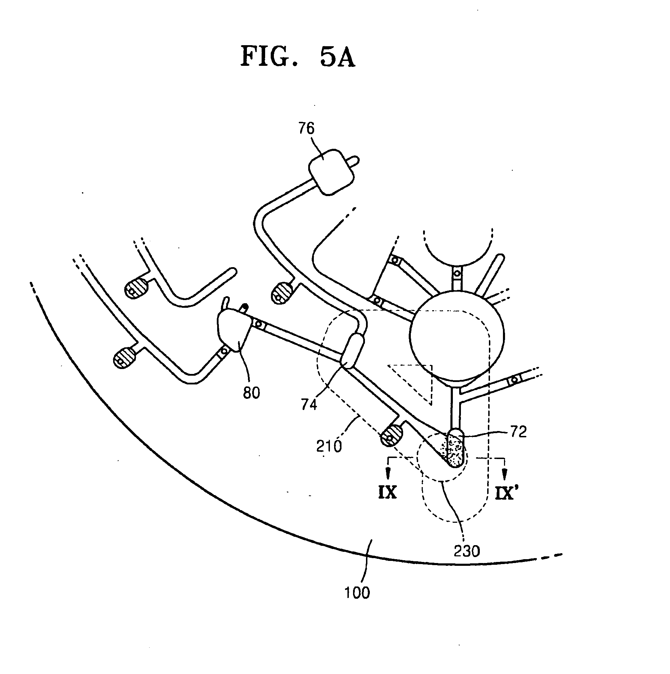

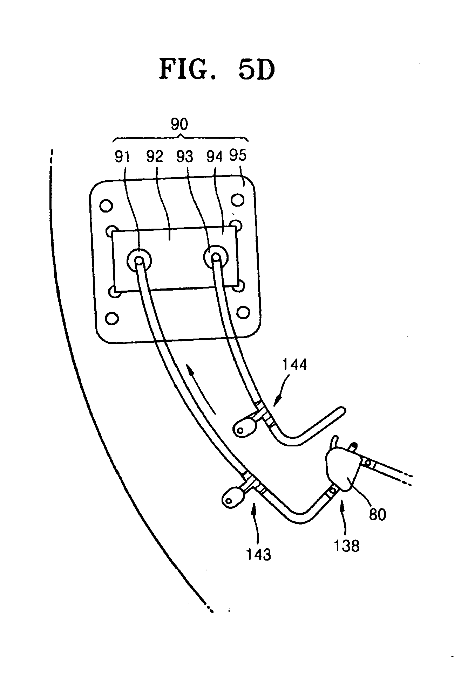

FIGS. 5A through 5D illustrate extraction of nucleic acids from magnetic beads which have captured target cells and amplification of the nucleic acids in the microfluidic device 102 of FIG. 4. The capturing of target cells using magnetic beads and the rinsing and collection of the magnetic beads in the mixing chamber 50 are as described above with respect to the microfluidic device 101 of FIG. 1. When magnetic beads which have captured target cells are collected near an outlet of the mixing chamber 50, the normally closed valve 136 of a channel connected to the magnetic bead collection chamber 72 is opened to discharge the magnetic beads.

At this time, the first magnet 230 of the guide rail 210 is positioned to correspond to the magnetic bead collection chamber 72 (see FIG. 5A). At this time, a lubricant supplied from the lubricant chamber 76 may be present between the cell lysis chamber 74 and the magnetic bead collection chamber 72. The lubricant may be a liquid material that facilitates the movement of the magnetic beads and that can serve as a buffer upon cell lysis.

The first magnet 230 is moved along the guide rail 210 by radially inwardly moving the second magnet (not shown) disposed outside of the platform 100'. The magnetic beads are transferred from the magnetic bead collection chamber 72 to the cell lysis chamber 74 by the magnetic force of the first magnet 230. After the magnetic beads are transferred to the cell lysis chamber 74, the normally open valves 145 and 146 disposed in the channels communicating with the cell lysis chamber 74 are closed.

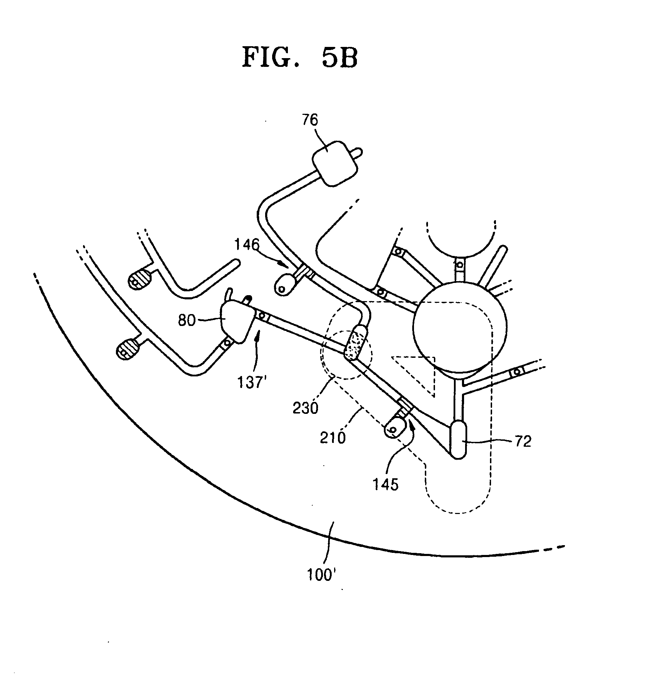

Electromagnetic radiation (e.g., laser beam) is applied to an area including the cell lysis chamber 74 using an electromagnetic energy source disposed outside of the platform 100' in a state wherein the cell lysis chamber 74 is sealed, to thereby perform cell lysis (see FIG. 5B).

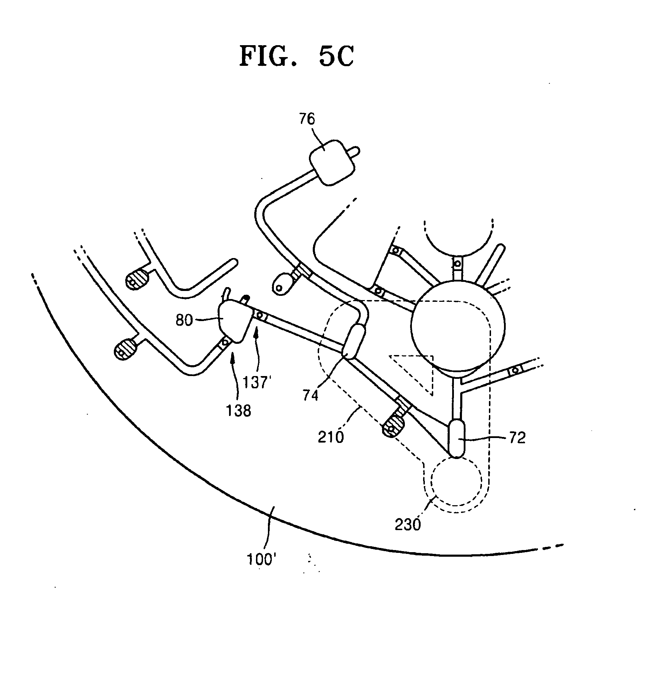

Next, the normally closed valve 137' of a channel communicating with the PCR reagent chamber 80 is opened, and a fluid containing a target cell nucleic acid is transferred to the PCR reagent chamber 80. The nucleic acid-containing fluid and the PCR reagent are mixed in the PCR reagent chamber 80. At this time, the magnetic beads on which cell debris, etc. are attached are isolated from a fluid by a centrifugal force and trapped in the cell lysis chamber 74 (see FIG. 5C).

Next, a normally closed valve 138 disposed at an outlet of the PCR reagent chamber 80 is opened, and a mixed solution of the PCR reagent and the nucleic acid solution is transferred to a PCR chamber 92. Then, normally open valves 143 and 144 of channels connected to an inlet 91 and an outlet 93 of the PCR chamber 92 are closed, and PCR is performed. The mixed solution of the PCR chamber 92 is thermally cycled using a temperature control unit (not shown), which may be disposed outside of the platform 100'. Here, the normally open valves 143 and 144 sealing the PCR chamber 92 should withstand a pressure of at least 6.8 psi. (46.9 kPa) (see Lab Chip, 2005. 5. 845-850).

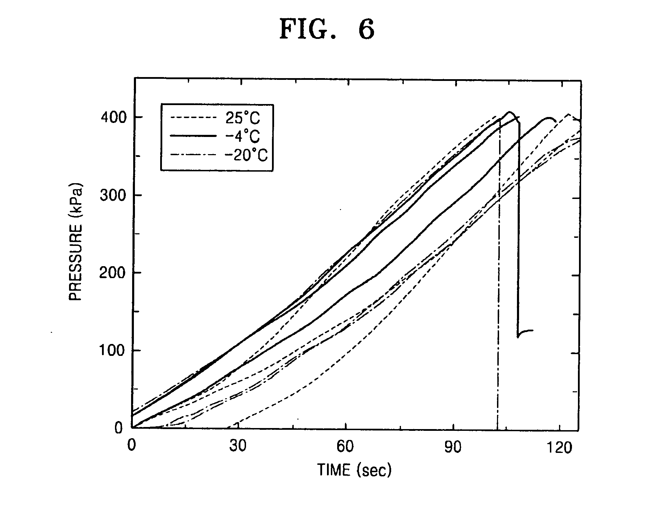

FIG. 6 is a graph illustrating the results of pressure resistance tests for the normally open valve of FIG. 3. A valve material including a heating fluid whose magnetic flux density is 250 G (50 vol %) and a paraffin wax whose melting point is 51°C (50 vol %) is used . As the heating fluid, FERROFLUID^{™} was employed. FERROFLUID™ is composed of 77 to 92 wt % of a carrier oil, 1 to 5 wt % of iron oxide particles having a mean diameter of 10 nm, 6 to 16 wt % of a dispersant (surfactant), and 1 to 2 wt % of an additive, and available from Ferrotech Inc. According to the test results under conditions of 25°C, -4°C, and -20°C, fluid leakage did not occur at up to 400 kPa.

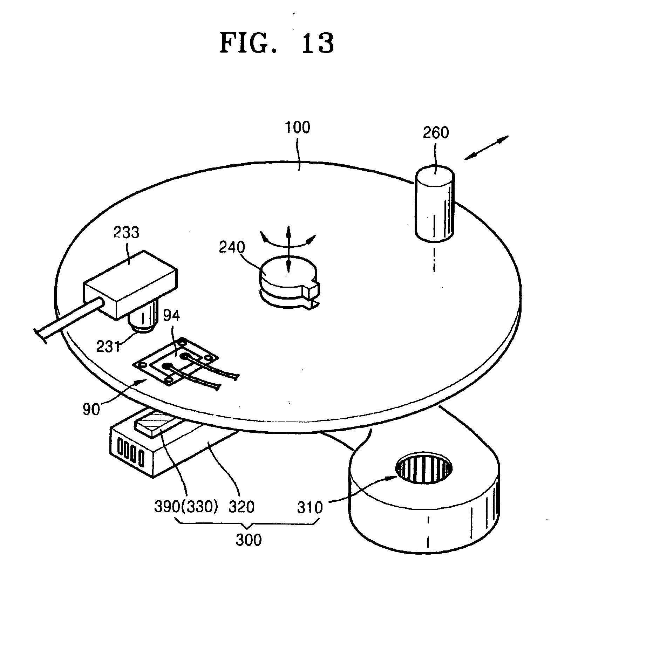

FIG. 7 is a detailed sectional view illustrating a PCR chip unit included in the microfluidic device of FIG. 1 or 4. Referring to FIG. 7, a PCR chip unit 90 may be detachably installed at a portion of a platform including an upper plate 110 and a lower plate 120. A PCR chip 94 may include a chip base 941 formed of a material having a higher thermal conductivity than a plastic material forming the platform. The chip base 941 may be formed of silicone (Si) or a polymer composite material. The PCR chamber 92 may be defined by the chip base 941 and a chip body 942 disposed on the chip base 941. An inlet 91 of the PCR chamber 92 is connected to a channel formed in the platform, and a sealing member 96 may be disposed at a connection portion between the inlet 91 and the channel. The sealing member 96 may be an O-ring formed of an elastic material (e.g., rubber). The PCR chip 94 may be supported by a rear cover 95 attached or connected to a rear surface of the platform. Here, the rear cover 95 may expose at least a portion of the chip base 941. The exposed portion of the chip base 941 contacts with a heat exchanger (see 390 of FIG. 13) of a temperature control unit (see FIG. 13) as will be described later to perform a heat exchange.

FIG. 8 is a sectional view illustrating a modified example of the PCR chip unit of FIG. 7. Referring to FIG. 8, a PCR chamber 92' may be defined by a three dimensional pattern formed in a lower plate 120 of a platform and a chip base 94' forming a lower wall surface. As described above, the chip base 94' may be formed of a material having a higher thermal conductivity than the other portions of the platform. A sealing member 96' for sealing the PCR chamber 92' may be disposed between the lower plate 120 and the chip base 94'. The chip base 94' may be attached to the lower plate 120 or secured by a fastener such as a bolt.

FIG. 9 is a sectional view illustrating an example of a magnetic bead position control unit included in the microfluidic device of FIG. 4. The magnetic bead position control unit refers to constitutional elements controlling the position of magnetic beads in microfluidic structures using a magnetic force. The magnetic bead position control unit includes a first magnet, a second magnet, and a guide rail as described above. Referring to FIG. 9, microfluidic structures, such as a magnetic bead collection chamber 72, may be provided in a first layer by three dimensional patterns defined by a lower plate 120 and a middle plate 200 of a platform 100'. A guide rail 210 of a second layer may be provided by a three dimensional pattern defined by the middle plate 200 and an upper plate 110. However, the present invention is not limited thereto. A second magnet 231 is disposed outside of the platform 100'. The second magnet 231 is disposed closer to the second layer than to the first layer. A housing 233 supporting the second magnet 231 may be moved in the radial direction of the platform 100' by a separately prepared moving element (not shown). The second magnet 231 may have a magnetic force large enough to change the position of a first magnet 230 disposed in the guide rail 210 but that does not affect the position of magnetic beads P in the microfluidic structures of the first layer. The first magnet 230 may have a magnetic force large enough to change the position of the magnetic beads P.

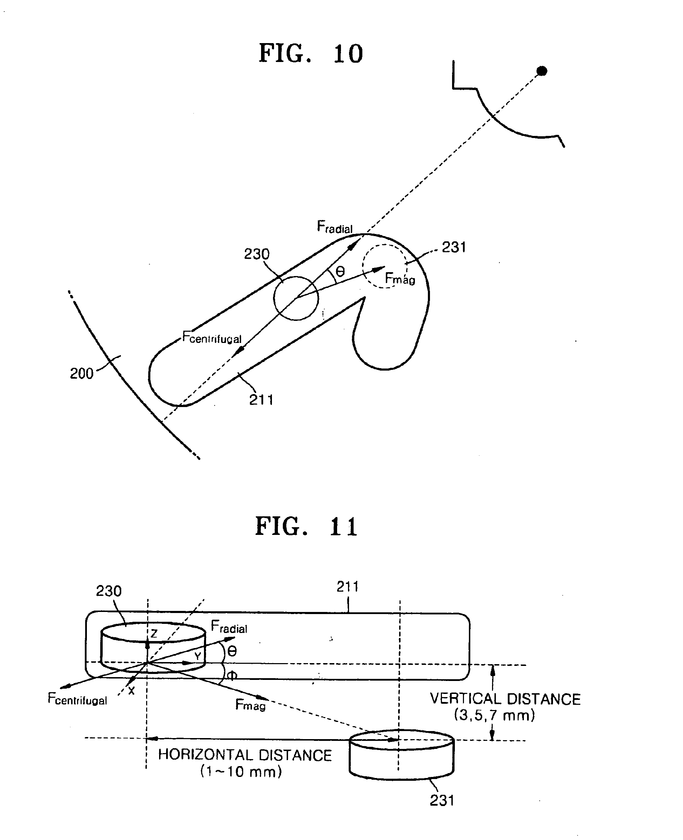

FIG. 10 is a planar free body diagram illustrating a magnetic bead position control unit, and FIG. 11 is a sectional free body diagram illustrating the operational principle of a magnetic bead position control unit. For example, when a guide rail 211 is shaped as shown in FIGS. 10 and 11, a force acting on a first magnet 230 can be calculated by the following equation.

First, a centrifugal force acting on the first magnet 230 is expressed as follows: F_{cent}=mrω² where m is a mass of the first magnet 230, r is a distance from the center of rotation, and ω is an angular velocity. The centrifugal force (F_{cent}) is parallel to a radial component (**F**_{radial}) of a magnetic force generated by a second magnet 231.

The radial component (**F**_{radial}) of the magnetic force generated by the second magnet 231 is expressed as follows: |**F**_{radia}| = |**F**_{mag}|×cos(θ)×cos(ϕ). Here, **F**_{mag}= ∇Uₘₐg where U_{mag} is an instant energy density of magnetic field and is expressed as follows: U_{mag}=1/2**B·H**. In the present embodiment, the physical properties of Nd-Fe-B magnets used as the first and second magnets 230 and 231 are as follows: µr (relative permiability) = 1.044, σ(conductivity) = 6.25* 10⁵[siemens/meter], Hc (magnetic coercivity) = -8.38* 10⁵[Ampere/meter], Br(magnetic retentivity) = 1.1[Tesla], and M(magnetization) = 875352.19[Ampere/meter].

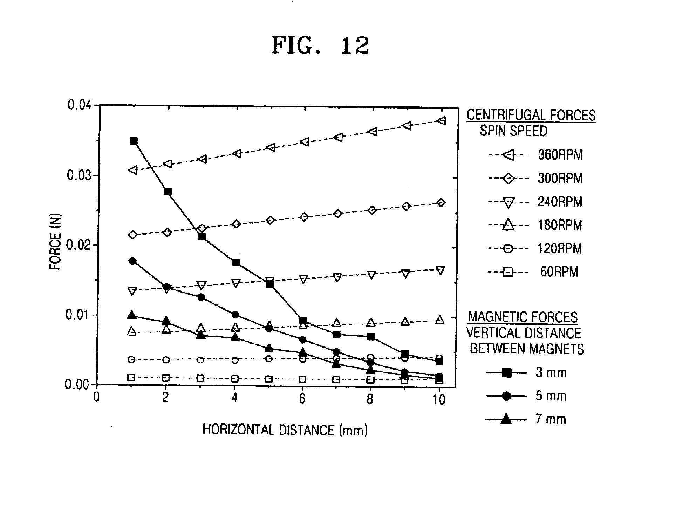

FIG. 12 is a graph illustrating a magnetic force with respect to a vertical distance and a horizontal distance between two magnets in the free body diagram of FIG. 11. Referring to FIGS. 11 and 12, by applying the physical property values of the first and second magnets 230 and 231, a horizontal distance between the first and second magnets 230 and 231 in a parallel state with respect to the spin speed of a platform and a vertical distance between the first and second magnets 230 and 231 was calculated, and the results are shown in FIG. 12.

For example, when the spin speed of the platform is 300 rpm and the vertical distance between the first and second magnets 230 and 231 is 3 mm, the magnetic force is greater than the centrifugal force until the horizontal distance between the first and second magnets 230 and 231 reaches 3 mm. As the horizontal distance between the first and second magnets 230 and 231 increases, the centrifugal force becomes greater than the magnetic force. Although not shown, if the spin speed of the platform exceeds 420 rpm, the centrifugal force is always greater than the magnetic force. At this time, the first magnet 230 falls outside the influence of the second magnet 231 and is moved to a portion of the guide rail 211 which is the farthest from the spin axis of the platform.

Hereinafter, a microfluidic system for extracting a nucleic acid from a target cell according to the present invention will be described.

FIG. 13 is a perspective view illustrating a microfluidic system for use according to an embodiment of the present invention. A microfluidic system for use according to the present invention includes a microfluidic device as described above and constitutional elements necessary for operating the microfluidic device. The microfluidic system includes a rotation driver 240 controllably rotating a platform 100 and an external energy source 260 applying electromagnetic radiation to a predetermined area of the platform 100. For example, the external energy source 260 may be a laser source emitting laser beam or an optical source emitting light of various wavelengths. Meanwhile, the microfluidic system may further include an optical detector (not shown) capable of optically detecting an intermediate or a product of a reaction which has occurred in the microfluidic system, in particular a real-time PCR procedure.

The external energy source 260 can be used to perform cell lysis as described above, and may include at least one laser diode. The external energy source 260 is not limited thereto provided that it can satisfy the above-described conditions such as output and wavelength. When a phase transition type normally closed and/or open valve including heating particles is included in the microfluidic device, the external energy source 260 can also be used to operate the phase transition type valve discussed above.

The microfluidic system may include an external energy source adjustor (not shown) adjusting the position or movement direction of the external energy source 260. The external energy source adjustor can allow electromagnetic radiation to be focused on a predetermined area of the platform 100, in detail, an area selected from a plurality of phase transition type normally closed or open valves and a cell lysis chamber of the microfluidic device.

As described above, the microfluidic system may further include a movement element capable of moving a housing 233 supporting a second magnet 231 in a radial direction of the platform 100. Meanwhile, the microfluidic system includes a temperature control unit 300 disposed outside the platform 100.

The temperature control unit 300 may include a heat exchanger 390 facing a rear surface of the platform 100. The heat exchanger 390 is a heat exchangeable member contacting a chip base of a PCR chip 94 disposed at a portion of the platform 100 when the rotation of the platform 100 is stopped. The temperature control unit 300 may include a heater 330 and a cooler. According to the present embodiment, the heater 330 is thermally and conductingly connected to at least a portion of the heat exchanger 390, and the cooler may include a cooling fan 310 and a duct 320 for blowing a fresh air toward the heat exchanger 390. However, the construction of the temperature control unit 300 is not limited to the above-described example provided that the temperature control unit 300 can externally heat or cool a PCR chip unit 90 when the rotation of the platform 100 is stopped.

According to the present invention, a series of operations for detecting genetic characteristics, including isolation of a target cell from a biological sample, purification and concentration of the target cell, extraction of a nucleic acid from the concentrated target cell, and PCR, can be automatically and rapidly performed in a single device.

While the present invention has been particularly shown and described with reference to exemplary embodiments thereof, it will be understood by those of ordinary skill in the art that various changes in form and details may be made therein without departing from the scope of the present invention as defined by the claims.

## Claims

1. Use of a centrifugal force-based microfluidic device (101), the centrifugal force-based microfluidic device (101) comprising:
a rotary platform (100);
a target cell nucleic acid extraction unit (20, 40, 50, 60, 70), which comprises a microfluidic structure and is formed in the platform, wherein the target cell nucleic acid extraction unit comprises
a first chamber (50) wherein in use a biological sample from which the target cell is to be separated, is mixed with an agent which selectively captures the target cell to obtain the agent which is captured with the target cell ("target cell-captured agent"), wherein the agent is microparticles of which surface is modified to have selective affinity to the target cells; and
a second chamber (70) wherein in use the target-cell is lysed to obtain a solution containing a target cell nucleic acid; and
a nucleic acid amplification unit (80, 90) which is provided in the platform and connected to the target cell nucleic acid extraction unit so as to receive the nucleic acid from the target cell nucleic acid extraction unit in use, wherein the nucleic acid amplification unit contains a nucleic acid amplification reagent, said nucleic acid amplification reagent and the nucleic acid moved from the target cell nucleic acid extraction unit being allowed to react to amplify the nucleic acid,
wherein in use flow of fluid in the device is driven by centrifugal force generated by the rotation of the device;
**characterized in that**
the disintegration is carried out by applying electromagnetic radiation to the target cell-captured agent causing ablation on the microparticles.

2. Use of the centrifugal force-based microfluidic device according to claim 1, wherein the nucleic acid amplification unit is a polymerase chain reaction (PCR) unit and wherein the nucleic acid amplification reagent is a polymerase chain reaction (PCR) reagent.

3. Use of the centrifugal force-based microfluidic device according to claim 1 or 2, wherein the microfluidic structure of the target cell nucleic acid extraction unit further comprises:
a sample chamber (21) receiving the sample;
a buffer chamber (40) storing a buffer solution; and
a waste chamber (60);
wherein the first chamber is a mixing chamber being connected to the sample chamber and the buffer chamber to receive the sample and the buffer solution under the control of normally closed valves disposed at outlets of the sample chamber and the buffer chamber, having an outlet which is disposed radially outward of the outlet of the sample chamber and the outlet of the buffer chamber and at which a normally closed valve is disposed, and performing a reaction between the microparticles and the sample;
wherein the waste chamber is connected to a portion of the first chamber which is disposed radially inward of the outlet of the first chamber via a channel to receive a fluid from the first chamber under control of a normally closed valve and a normally open valve disposed in the channel,
and wherein
the second chamber is a cell lysis chamber being connected to the outlet of the first chamber to receive a fluid containing the microparticles from the outlet of the first chamber and performing cell disintegration by electromagnetic radiation supplied from the outside of the platform.

## Patentansprüche

1. Verwendung einer auf Zentrifugalkraft basierenden Mikrofluidik-Vorrichtung (101), wobei die auf Zentrifugalkraft basierende Mikrofluidik-Vorrichtung (101) umfasst:
eine Drehplattform (100);
eine Einheit (20, 40, 50, 60, 70) zum Extrahieren von Nucleinsäure aus einer Ziel-Zelle, die eine Mikrofluidik-Struktur umfasst und in der Plattform ausgebildet ist, wobei die Einheit zum Extrahieren von Nucleinsäure aus einer Ziel-Zelle umfasst:
eine erste Kammer (50), in der in Funktion eine biologische Probe, aus der die Ziel-Zelle abgeschieden werden soll, mit einem Wirkstoff gemischt wird, der selektiv die Ziel-Zelle einfängt, um den Wirkstoff zu gewinnen, der mit der Ziel-Zelle eingefangen wird ("mit Ziel-Zelle eingefangener Wirkstoff'), wobei der Wirkstoff aus Mikroteilchen besteht, deren Oberfläche so modifiziert ist, dass sie selektive Affinität zu den Ziel-Zellen aufweist; und
eine zweite Kammer (70), in der in Funktion Lyse der Ziel-Zelle durchgeführt wird, um eine Lösung zu gewinnen, die eine Nucleinsäure der Ziel-Zelle enthält; und
eine Nucleinsäuren-Amplifikationseinheit (80, 90), die in der Plattform vorhanden und mit der Einheit zum Extrahieren von Nucleinsäure aus einer Ziel-Zelle verbunden ist, um in Funktion die Nucleinsäure von der Einheit zum Extrahieren von Nucleinsäure aus einer Ziel-Zelle aufzunehmen, wobei die Nucleinsäuren-Amplifikationseinheit ein Nucleinsäuren-Amplifikationsreagenz enthält und das Nucleinsäuren-Amplifikationsreagenz und die aus der Einheit zum Extrahieren von Nucleinsäure aus einer Ziel-Zelle ausgeleitete Nucleinsäure miteinander reagieren können, um die Nucleinsäure zu amplifizieren,
wobei in Funktion der Strom von Fluid in der Vorrichtung durch Zentrifugalkraft bewirkt wird, die durch Drehung der Vorrichtung erzeugt wird;
**dadurch gekennzeichnet, dass**
die Auflösung ausgeführt wird, indem elektromagnetische Strahlung auf den mit der Ziel-Zelle eingefangenen Wirkstoff angewendet wird, die Ablation an den Mikroteilchen bewirkt.

2. Verwendung der auf Zentrifugalkraft basierenden Mikrofluidik-Vorrichtung nach Anspruch 1, wobei die Nucleinsäuren-Amplifizierungseinheit eine PCR-Einheit (polymerase chain reaction unit) ist und der Nucleinsäuren-Amplifikationswirkstoff ein PCR-Reagenz (polymerase chain reaction reagent) ist.

3. Verwendung der auf Zentrilfugalkraft basierenden Mikrofluidik-Vorrichtung nach Anspruch 1 oder 2, wobei die Mikrofluidik-Struktur der Einheit zum Extrahieren von Nucleinsäure aus einer Ziel-Zelle des Weiteren umfasst:
eine Proben-Kammer (21), die die Probe aufnimmt;
eine Puffer-Kammer (40) zum Speichern einer Pufferlösung; und
eine Abprodukt-Kammer (60);
wobei die erste Kammer eine Misch-Kammer ist, die mit der Proben-Kammer und der Puffer-Kammer verbunden ist, um die Probe und die Pufferlösung von im Ruhezustand geschlossenen Ventilen gesteuert zu empfangen, die an Auslassen der Proben-Kammer und der Puffer-Kammer angeordnet sind, und die einen Auslass hat, der radial außerhalb des Auslasses der Proben-Kammer und des Auslasses der Puffer-Kammer angeordnet ist und an dem ein im Normalzustand geschlossenes Ventil angeordnet ist, und die eine Reaktion zwischen den Mikroteilchen und der Probe durchführt;
die Abprodukt-Kammer mit einem Abschnitt der ersten Kammer, der radial innerhalb des Auslasses der ersten Kammer angeordnet ist, über einen Kanal verbunden ist, um ein Fluid von der ersten Kammer von einem im Normalzustand geschlossenen Ventil und einem im Normalzustand geöffneten Ventil gesteuert zu empfangen, die in dem Kanal angeordnet sind,
und
die zweite Kammer eine Zelllyse-Kammer ist, die mit dem Auslass der ersten Kammer verbunden ist, um ein Fluid, das die Mikroteilchen enthält, über den Auslass der ersten Kammer zu empfangen und Zelllabbau mittels elektromagnetischer Strahlung durchzuführen, die von außerhalb der Plattform zugeführt wird.

## Revendications

1. Utilisation d'un dispositif microfluidique basé sur la force centrifuge (101), le dispositif microfluidique basé sur la force centrifuge (101) comprenant :
une plate-forme rotative (100) ;
une unité d'extraction d'acide nucléique de cellule cible (20, 40, 50, 60, 70), qui comprend une structure microfluidique et est formée dans la plate-forme, dans laquelle l'unité d'extraction d'acide nucléique de cellule cible comprend
une première chambre (50) dans laquelle pendant l'utilisation, un échantillon biologique dont la cellule cible doit être séparée est mélangé avec un agent qui capture de manière sélective la cellule cible pour obtenir l'agent qui est capturé avec la cellule cible (« agent de capture de cellule cible »), dans laquelle l'agent est constitué de microparticules dont la surface est modifiée pour présenter une affinité sélective avec les cellule cible ; et
une seconde chambre (70) dans laquelle pendant l'utilisation, la cellule cible est lysée pour obtenir une solution contenant un acide nucléique de cellule cible ; et
une unité d'amplification d'acide nucléique (80, 90) prévue dans la plate-forme et reliée à l'unité d'extraction d'acide nucléique de cellule cible de façon à recevoir l'acide nucléique depuis l'unité d'extraction d'acide nucléique de cellule cible pendant l'utilisation, dans laquelle l'unité d'amplification d'acide nucléique contient un réactif d'amplification d'acide nucléique, ledit réactif d'amplification d'acide nucléique et l'acide nucléique déplacé depuis l'unité d'extraction d'acide nucléique de cellule cible étant autorisés à réagir pour amplifier l'acide nucléique,
dans laquelle pendant l'utilisation, l'écoulement de fluide dans le dispositif est commandé par la force centrifuge générée par la rotation du dispositif ;
**caractérisée en ce que**
la désintégration est effectuée en appliquant un rayonnement électromagnétique à l'agent de capture de cellule cible, provoquant une ablation sur les microparticules.

2. Utilisation du dispositif microfluidique basé sur la force centrifuge selon la revendication 1, dans laquelle l'unité d'amplification d'acide nucléique est une unité de réaction en chaîne par polymérase (PCR) et dans laquelle le réactif d'amplification d'acide nucléique est un réactif de réaction en chaîne par polymérase (PCR).

3. Utilisation du dispositif microfluidique basé sur la force centrifuge selon la revendication 1 ou 2, dans laquelle la structure microfluidique de l'unité d'extraction d'acide nucléique de cellule cible comprend en outre :
une chambre d'échantillon (21) recevant l'échantillon ;
une chambre de tampon (40) contenant une solution tampon ; et
une chambre de déchets (60) ;
dans laquelle la première chambre est une chambre de mélange reliée à la chambre d'échantillon et à la chambre de tampon pour recevoir l'échantillon et la solution tampon sous le contrôle de soupapes normalement fermées disposées sur les sorties de la chambre d'échantillon et de la chambre de tampon, ayant une sortie disposée radialement vers l'extérieur de la sortie de la chambre d'échantillon et la sortie de la chambre de tampon et au niveau de laquelle est disposée une soupape normalement fermée, et effectuant une réaction entre les microparticules et l'échantillon ;
dans laquelle la chambre de déchets est reliée à une partie de la première chambre qui est disposée radialement vers l'intérieur de la sortie de la première chambre par l'intermédiaire d'un canal destiné à recevoir un fluide depuis la première chambre sous le contrôle d'une soupape normalement fermée et d'une soupape normalement ouverte, disposées dans le canal, et
la seconde chambre est une chambre de lyse de cellule reliée à la sortie de la première chambre pour recevoir un fluide contenant les microparticules depuis la sortie de la première chambre et effectuant une désintégration de cellule au moyen d'un rayonnement électromagnétique fourni depuis l'extérieur de la plate-forme.
